# FASCICULE DE BREVET EUROPEEN

(11) **EP 0 574 047 B1**
(45) Date de publication et mention de la délivrance du brevet: **15.07.1998**
(21) Numéro de dépôt: 93114706.0
(22) Date de dépôt: 24.10.1990
(51) Int. Cl.: B61D 3/20, B61D 45/00

(54) **Véhicule ferroviaire permettant la manutention automatique de boîtes**
Eisenbahnwagen zum automatischen Handhaben von Behältern
Railway vehicle for the automatic handling of containers

(30) Priorité: 24.10.1989 FR 8913941
(43) Date de publication de la demande: 15.12.1993
(62) Demande divisionnaire de: 90402988.1
(73) Titulaire: SOCIETE NATIONALE DES CHEMINS DE FER FRANCAIS, F-75436 Paris Cedéx 09 (FR)
(72) Inventeur: Guigon, Marc, F-77360 Vaires-sur-Marne (FR); Vogt, Pierre, F-91370 Verrières-le-Buisson (FR)
(74) Mandataire: Casalonga, Axel

(56) Documents cités:
- EP-A- 0 131 984
- DE-U- 7 333 060
- FR-A- 2 504 484

## Description

L'invention a pour objet un véhicule ferroviaire permettant la manutention automatique de boîtes.

Les boîtes dont on va décrire la manutention dans la présente demande de brevet, peuvent être des conteneurs maritimes ou terrestres, des caisses mobiles ou des superstructures a gabarit ferroviaire, c'est-à-dire constituées par un wagon classique dont on a enlevé les bogies. Ces boîtes comportent en partie inférieure des dispositifs de liaison assurant le maintien des boîtes sur la plateforme d'un véhicule, notamment d'un véhicule ferroviaire tel qu'un wagon de marchandises.

La manutention de telles boîtes transportées par wagons de marchandises a été jusqu'à présent une opération relativement complexe et longue effectuée dans un chantier de transport combiné consistant à déplacer les boîtes entre une zone de stockage des boîtes ou des camions et des wagons de chemins de fer se trouvant sur une voie ferrée longeant la voie de stockage.

Les wagons sont ensuite acheminés, soit par des trains entiers entre chantiers de transport combiné lorsque les flux de trafic sont importants, soit par des trains passant dans des gares de triage lorsque les flux de trafic sont plus faibles, ce qui entraîne une perte de temps très importante sur l'acheminement des wagons et des chocs répétés sur les wagons transportant les boîtes, augmentant ainsi notablement les risques de détérioration des marchandises contenues dans les boîtes.

La manutention dans un chantier de transport combiné s'effectue, soit au moyen d'autogrues se déplaçant sur pneus à côté de la voie ferrée, soit au moyen de portiques se déplaçant sur des rails parallèlement à la voie ferrée sur laquelle se trouvent les wagons portant les boîtes, les portiques enjambant la voie ferrée.

Dans ces installations, l'autogrue ou le portique se déplace le long du train jusqu'à se trouver au-dessus d'une boîte déterminée. Un dispositif d'accrochage et de levage permet à l'autogrue ou au portique de saisir la boîte, soit par ses pièces de coin supérieures, soit par des zones de prises qui peuvent être situées dans la partie inférieure de la boîte. Une fois la boîte soulevée, elle est déplacée le long du portique perpendiculairement à la voie jusqu'à se trouver au-dessus de la zone de stockage.

De telles installations ne permettent pas d'assurer une manutention rapide et intégralement automatisée des boîtes.

Par ailleurs, FR-A-2 504 484 et DE-U- 7333060 décrivent des wagons dont la structure ne permet pas une manutention automatisée de boîtes.

En effet, FR-A-2 504 484 décrit un wagon comportant deux rails de liaison longitudinaux sur lesquels sont fixées à demeure, à des distances rigoureusement constantes, des chevilles escamotables manuellement et destinées à assurer le verrouillage des conteneurs, tandis que le wagon décrit dans DE-U-7 333 060, comporte un système de verrouillage permettant de verrouiller sur la plateforme du wagon des conteneurs, et consistant en des chevilles pouvant pivoter autour d'un axe tout en étant solidaires d'une barre fixée sur le wagon.

Une installation et un procédé de manutention automatique permettant une importante diminution de la durée de manutention , assurant en outre une possibilité d'automatisation complète de l'ensemble des opérations de manutention, et permettant d'assurer le transfert des boîtes d'un train à un autre, sont décrits dans EP-A-0426528.

Une telle installation de manutention automatique de boîtes transportées par des wagons de chemins de fer comprend au moins une voie ferrée principale longeant une zone de stockage de boîtes et des moyens de manutention mobiles capables de saisir les boîtes et de les déplacer entre les wagons se trouvant sur la voie ferrée principale et la zone de stockage. Les moyens de manutention mobiles comprennent plusieurs ponts roulants capables de se déplaçer en translation uniquement perpendiculairement à la voie ferrée principale. Chaque pont roulant est équipé d'un palonnier muni d'une pluralité de dispositifs de préhension de boîtes. L'installation comprend en outre au moins une voie ferrée de service disposée parallèlement à la voie ferrée principale, et sur laquelle peuvent circuler une pluralité de navettes autonomes en vue du déplacement des boîtes d'un pont roulant à l'autre, ce déplacement se faisant donc uniquement parallèlement à la voie ferrée principale.

Il est possible, bien entendu, de prévoir plusieurs voies ferrées principales et plusieurs voies ferrées de service parallèles aux voies ferrées principales, chacune des voies ferrées de service permettant le déplacement d'une pluralité de navettes autonomes.

Des moyens de positionnement des wagons sont avantageusement prévus sur ou au voisinage de la voie ferrée principale, de façon à placer chaque wagon en position correcte en face d'un pont roulant déterminé. De cette manière, les différents wagons se trouvent positionnés avec une précision suffisante.

L'installation est divisée en plusieurs travées perpendiculaires à la voie ferrée principale, chaque travée correspondant a un wagon. Chaque travée comprend un pont roulant et plusieurs emplacements de stockage dans la zone de stockage.

Tous les wagons portant les boîtes et se déplaçant sur la voie ferrée principale ont de préférence la même longueur, qui correspond également à celle des navettes autonomes et a la largeur d'une travée.

Dans le cas où la voie ferrée principale est électrifiée et munie d'une caténaire, l'installation comprend, en outre, des moyens pour escamoter la caténaire pendant les opérations de manutention des boîtes. Un tel dispositif d'escamotage de la caténaire peut être placé sous les chemins de roulement des ponts roulants afin de déplacer latéralement la caténaire d'une distance suffisante, par exemple d'environ trois mètres, permettant ainsi aux ponts roulants de s'approcher jusqu'au-dessus des boîtes portées par les plateformes des wagons.

Les ponts roulants se déplacent quant à eux sur des chemins de roulement situés en hauteur, disposés perpendiculairement à la voie ferrée principale et écartés d'une distance sensiblement égale à la longueur d'un wagon. La commande de déplacement de chaque pont roulant peut se faire de façon automatique, le pont roulant recevant alors des signaux par radio, par câble ou des informations au moyen d'une boucle inductive. Le pont roulant peut alors se placer au-dessus d'un emplacement déterminé qu'il repère à l'aide de capteurs appropriés.

Des moyens de guidage du déplacement vertical des différents palonniers sont prévus à la fois sur le pont roulant lui-même et sur les wagons et les navettes autonomes. A cet effet, dans un mode de réalisation avantageux, les ponts roulants sont supportés par des montants verticaux munis de glissières capables de coopérer avec des patins de guidage escamotables pendant une partie du déplacement vertical du palonnier. Lorsque le palonnier est arrivé à proximité d'un wagon ou d'une navette autonome, les patins de guidage sont escamotés et le guidage se poursuit au moyen de bras de guidage solidaires du palonnier coopérant avec des guides de centrage prévus sur les wagons, les navettes autonomes et les emplacements de stockage.

Chaque palonnier comprend, avantageusement, des paires de pinces pivotantes, de préférence au nombre de quatre, adaptées pour saisir les boîtes par leur face inférieure. La manutention des boîtes se fait de préférence par des pièces intermédiaires amovibles de liaison et de manutention, capables de pénétrer d'une part dans les orifices des pièces de coin des boîtes et d'autre part dans des logements prévus sur les wagons, les navettes et les emplacements de stockage à des emplacements correspondant aux différentes dimensions des boîtes. A cet effet, il est possible d'utiliser avantageusement les pièces intermédiaires qui font l'objet de la demande de brevet EP-A-0425370.

L'installation peut comprendre encore des moyens pour commander automatiquement le déplacement des différents ponts roulants et les positionner au-dessus d'un wagon ou d'une navette ou encore un emplacement de stockage déterminé, des moyens pour commander automatiquement le mouvement vertical des palonniers et le mouvement de pivotement des pinces de préhension et des moyens pour commander automatiquement le déplacement des navettes autonomes d'une travée à l'autre le long de la ou les voies ferrées de service.

Selon le procédé de manutention automatique de boîtes décrit dans EP-A-0426528, on saisit par le dessous la ou les boîtes se trouvant sur un wagon déterminé ou un emplacement de stockage choisi et on déplace la boîte perpendiculairement à la voie ferrée principale. On dépose éventuellement la boîte sur un moyen de transport annexe capable de se céplacer parallèlement à la voie ferrée principale. On déplace le moyen de transport annexe en face de l'emplacement choisi de la zone de stockage ou du wagon déterminé et on saisit à nouveau la boîte par le dessous pour la déplacer perpendiculairement à la voie ferrée principale depuis le moyen de transport annexe jusqu'à l'emplacement choisi de la zone de stockage ou jusqu'au wagon déterminé. Ces opérations peuvent être faites dans un ordre différent selon les cas.

L'invention a pour but de proposer un véhicule ferroviaire permettant la manutention automatique de bôites, dont la structure autorise la manutention de boîtes de différentes tàilles et de différents formats. Ce véhicule est, soit un wagon tracté,soit une navette autonome.

Telle que revendiquée l'invention propose un véhicule ferroviaire permettant la manutention automatique de boîtes, comprenant, de chaque côté, une série de logements adaptés pour recevoir de manière amovible des pièces intermédiaires de liaison et de manutention de boîtes , chaque série de logements comprenant au moins trois paires de logements les distances entre les axes des logements de chacune des trois paires étant sensiblement égales respectivement aux produits de leur plus grand diviseur commun par trois multipticateurs entiers différents, chacun des trois paires de logements étant approximativement centrée par rapport à un axe respectif prédéterminé du véhicule qui est soit son axe transversal central soit l'un de ses axes transversaux secondaires.

L'une des paires de logements peut être centrée par rapport à l'axe transversal central.

Ladite paire de logements peut être associée au multiplicateur de plus forte valeur.

Chaque série peut comporter au moins deux paires de logements approximativement respectivement centrées par rapport aux deux axes transversaux secondaires.

Chacune desdites deux paires de logements peut être associée à un multiplicateur pris parmi les deux plus faibles.

Chaque série peut comporter deux groupes de quatre paires de logements disposés de part et d'autre de l'axe central, les quatre paires de chaque groupe étant approximativement centrées par rapport à l'axe transversal secondaire correspondant.

Chaque groupe peut comporter trois paires de logements associées au multiplicateur de plus faible valeur, et une paire de logements associée au multiplicateur de valeur intermédiaire.

Les logements peuvent être agencés de façon à permettre une préhension des boîtes et de leurs pièces intermédiaires de liaison et de manutention, par le dessous, lors de leur manutention.

Chaque logement peut comprendre un boîtier débordant du côté correspondant de la plateforme du véhicule auquel il est fixé, et comportant une ouverture traversante.

La face frontale supérieure des boîtiers peut se trouver à un niveau inférieur à celui de la plateforme du véhicule.

L'invention sera bien comprise à l'étude d'un mode de réalisation détaillé pris à titre d'exemple nullement limitatif et illustré par les dessins annexés, sur lesquels :
la figure 1 est une vue de dessus schématique partielle d'une installation de manutention :
la figure 2 est une vue transversale schématique de l'ensemble de l'installation;
la figure 3 est une vue en perspective éclatée schématisant la pièce intermédiaire utilisée dans l'installation l' orifice inférieur de la boîte, les moyens de liaison solidaires de la plateforme d'un wagon selon l'invention et l'extrémité active d'une pince de préhension ;
la figure 4 est une vue transversale partielle plus détaillée que la figure 2 illustrant un pont roulant et un palonnier en position basse au-dessus d'une navette ferroviaire;
la figure 5 est une vue longitudinale de l'ensemble illustré sur la figure 4, montrant les différentes pinces de préhension du palonnier, le pont roulant ayant été déplacé au-dessus d'un emplacement de stockage et le palonnier étant en position basse;
la figure 6 est une vue partielle de dessus du palonnier montrant les moyens de guidage verticaux;
la figure 7 est une vue en élévation du dispositif de positionnement des wagons;
la figure 8 est une vue de dessus du dispositif de positionnement de la figure 7; et
la figure 9 illustre schématiquement une plateforme de wagon selon l'invention utilisable dans l'installation montrant la position des pièces intermédiaires de liaison.

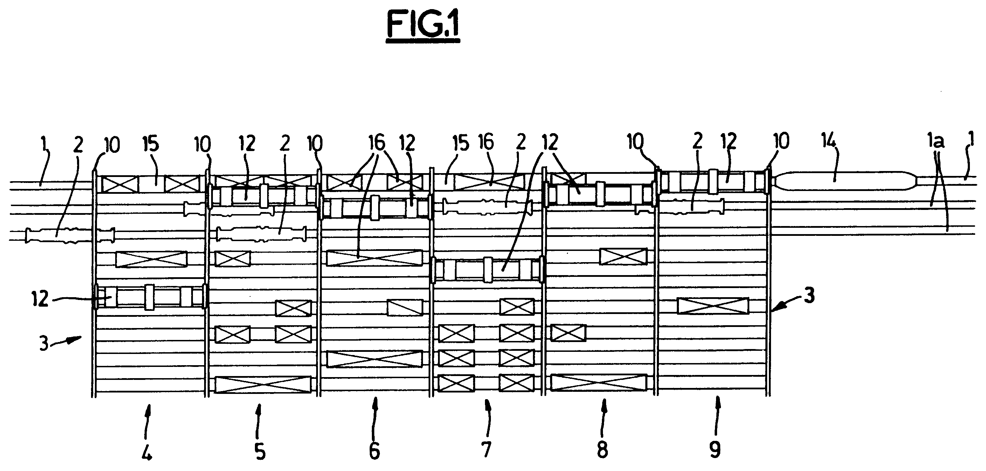

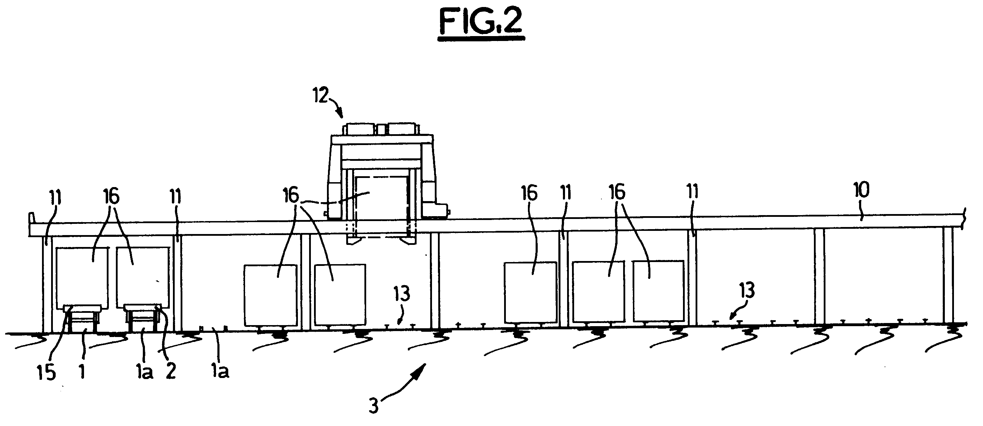

Telle qu'elle est illustrée sur les figures 1 et 2, l'installation de manutention automatique de boîtes comprend une voie ferrée principale 1, deux voies ferrées de service 1a disposées d'un même côté de la voie principale 1 et parallèles à celle-ci et une zone de stockage de boîtes 3 se trouvant au-delà des deux voies ferrées de service 1a, le long de celles-ci. Une pluralité de navettes ferroviaires autonomes 2 se déplacent le long de chaque voie ferrée de service 1a. L'installation, dans son ensemble, est divisée en plusieurs travées 4,5,6,7,8 et 9, perpendiculaires à la voie principale 1 et délimitées par des longerons 10 supportés par des montants verticaux 11, de façon à se trouver à une hauteur suffisante au-dessus du sol. Chaque travée 4 à 9 comporte un pont roulant référencé 12 dans son ensemble. Chaque pont roulant 12 se déplace sur deux chemins de roulement parallèles portés par les deux longerons 10 qui définissent la travée correspondante. Les ponts roulants 12 peuvent donc se déplacer en translation uniquement perpendiculairement à la voie ferrée principale 1 entre une position extrême où ils se trouvent au-dessus de ladite voie ferrée principale 1 et une deuxième position extrême sur le bord de la zone de stockage 3 à l'opposé de la voie 1. Les ponts roulants 12 peuvent occuper chaque position intermédiaire correspondant à un emplacement de stockage 13 de la zone de stockage 3 ou au-dessus de l'une des voies ferrées de service 1a.

Sur la voie ferrée principale 1, peut se déplacer un convoi ferroviaire comportant une locomotive 14 et une pluralité de wagons 15 capables de recevoir sur leur plateforme des boîtes 16 de différentes tailles et de différents types, qu'il s'agisse de conteneurs maritimes ou terrestres, de caisses mobiles ou de superstructures à gabarit ferroviaire. Les wagons 15 ont tous la même longueur hors tout, par exemple environ 20 mètres. Ils peuvent être chargés, comme on peut le voir sur la figure 1, d'une seule boîte 16, de longueur égale à environ 12 mètres ou de deux boîtes 16, de longueur comprise entre 6 mètres et 9,125 mètres chacune, ces dimensions correspondant aux dimensions habituelles normalisées.

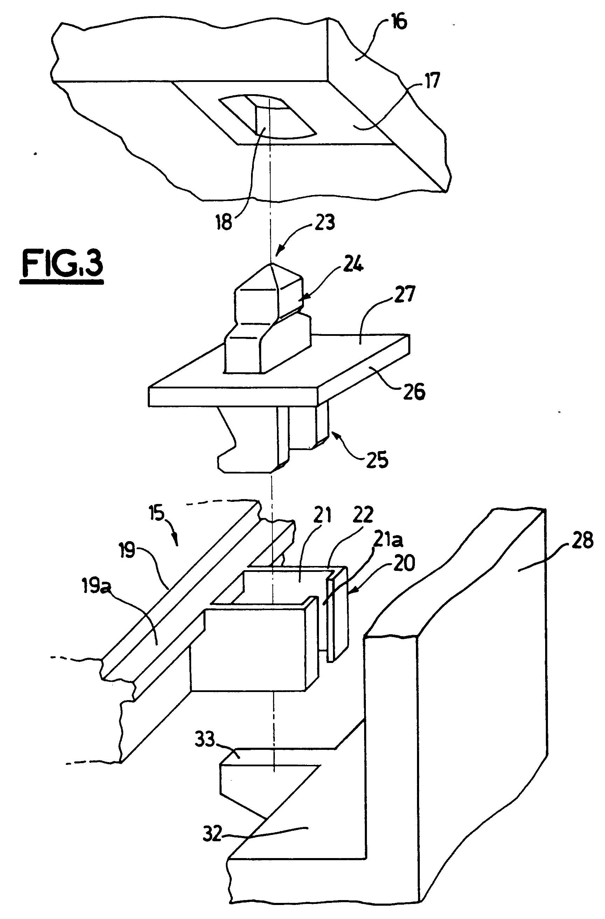

En se reportant à la vue en perspective éclatée de la figure 3, on voit que la boîte 16 présente dans ses coins inférieurs, des pièces de liaison 17 présentant une ouverture oblongue 18. La plateforme 19 du wagon 15 présente une surface horizontale plane dont les bords longitudinaux comportent ici un décrochement 19a. Le long de la bordure de la plateforme 19, sont disposés une pluralité de boîtiers 20 définissant des ouvertures traversantes 21, la face frontale supérieure 22 des boîtiers 20 se trouvant au même niveau que le décrochement 19a, c'est-à-dire à un niveau inférieur à celui de la plateforme 19. Une pièce intermédiaire amovible de liaison et de manutention, référencée 23 dans son ensemble, comprend une partie supérieure 24 en saillie vers le haut et une partie inférieure 25 en saillie vers le bas. Les parties supérieures 24 et inférieures 25 sont séparées par une semelle plane horizontale 26 dont l'épaisseur est égale à la valeur du décrochement entre le rebord 19a et la plateforme 19. Le profil de la partie supérieure 24 est adapté à celui de l'ouverture oblongue 18 de la boîte 16. De la même manière, la partie inférieure 25 est telle qu'elle puisse aisément pénétrer dans le boîtier 20 par son ouverture 21, la face inférieure de la sertelle 26 reposant alors sur la face frontale supérieure 22 du boîtier 20, ainsi que sur le rebord 19a de la plateforme 19. La face supérieure 27 de la semelle 26 se trouve donc au même niveau que la plateforme 19. La boîte 16 repose alors à la fois sur la plateforme 19 et sur la face supérieure 27 des semelles 26 des différentes pièces intermédiaires qui assurent la liaison de la boîte 16 avec le wagon 15 pendant le transport de la boîte 16 sur ledit wagon. Le profil de la partie supérieure 24 des différentes pièces intermédiaires 23 est tel que la liaison boîte/wagon soit suffisante pour répondre aux sollicitations diverses pendant la circulation du wagon. La semelle 26 présente de chaque côté des zones de bordure une dimension suffisante pour déborder de chaque côté du boîtier 20 lorsque la pièce intermédiaire 23 est introduite dans le boîtier 20.

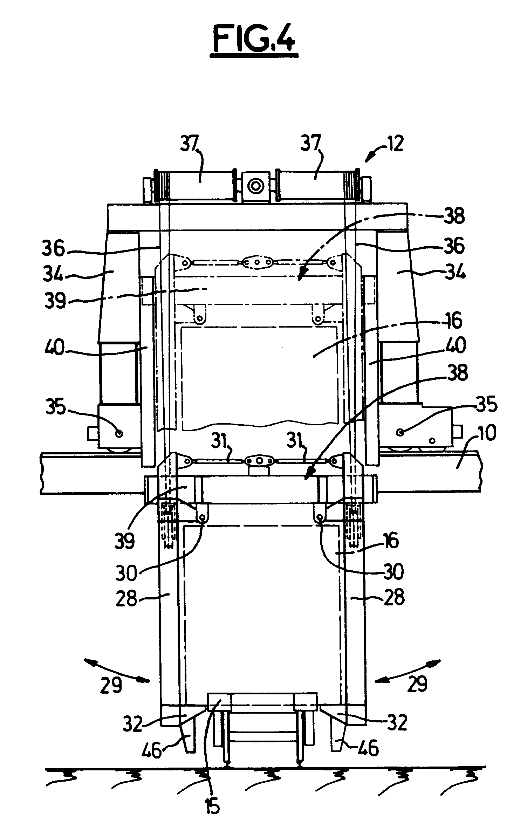

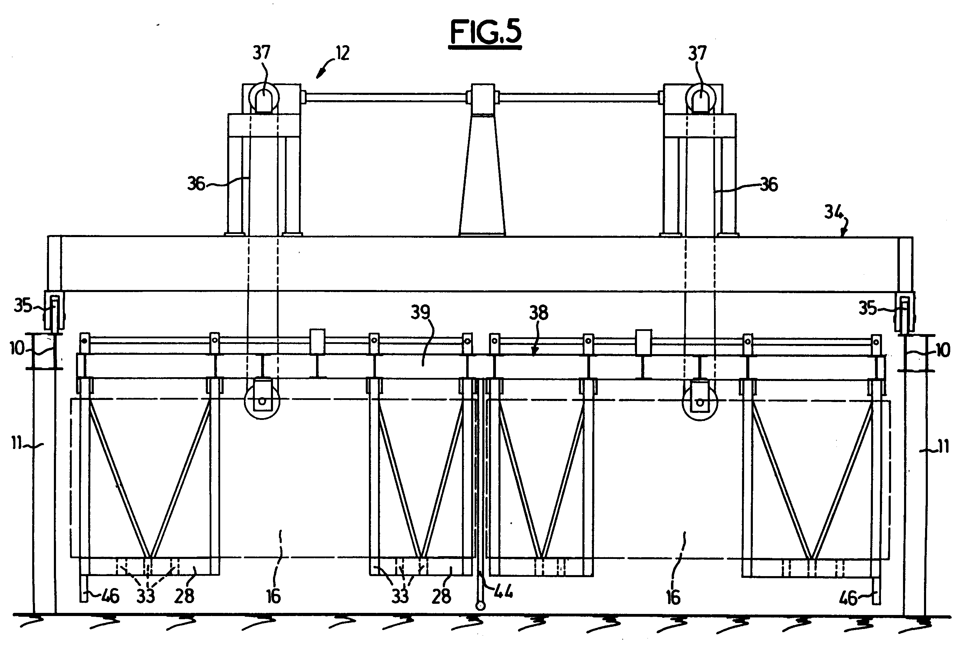

Pour procéder à la manutention de la boîte 16, on fait alors intervenir des pinces 28 également visibles sur la figure 4, qui peuvent pivoter dans le sens des flèches 29 (figure 4) autour d'axes 30 sous l'action d'une tringlerie 31. La partie inférieure 32 des pinces 28 peut venir s'engager sous chaque boîtier 20 d'une boîte 16. La partie inférieure 32 (figure 3) présente une pluralité de pattes de préhension 33 capables de pénétrer chacune dans un boîtier 20 par la fente 21a. Après éventuel déverrouillage de la pièce de liaison 23 par rapport au boîtier 20, les pièces de liaison 23 de la boîte 16 peuvent être soulevées par les pinces 28, la boîte 16 étant ensuite déplacée comme on va le voir. La disposition des pattes 33 sur chaque pince 28 est visible sur la figure 5.

En se reportant maintenant aux figures 4 et 5, on va décrire un exemple de réalisation d'un pont roulant 12. Tel qu'il est illustré, le pont roulant 12 comprend un bâti de support 34 capable de se déplacer sur les longerons 10 au moyen de galets 35 dont certains sont entraînés par un moteur non représenté sur la figure. L'écartement entre les différents montants verticaux 11 définissant l'une des travées 4 à 9, correspond également sensiblement à l'écartement entre les chemins de roulement des longerons 10. Cet écartement correspond sensiblement à la longueur d'un wagon 15, tous les wagons présentant la même longueur comme on l'a dit précédemment. Cet écartement correspond également sensiblement à la longueur de l'une des navettes autonomes 2 qui se déplace sur l'une ou l'autre des voies ferrées de service 1a. Dans ces conditions, chaque pont roulant 12 qui se déplace dans l'une des travées 4 à 9, correspond à un emplacement de wagon 15 et peut se déplacer uniquement perpendiculairement au déplacement du train sur la voie ferrée principale 1. La commande automatique du déplacement du pont roulant 12 Peut être réalisée au moyen d'une boucle inductive, d'un câble à enrouleur ou par des signaux transmis par radio. Le pont roulant 12 peut alors se positionner au-dessus d'un emplacement déterminé à l'aide de capteurs non représentés sur les figures.

Le bâti 34 du pont roulant 12 supporte des moufles 36 dont les câbles viennent s'enrouler sur des treuils 37 et qui soutiennent un palonnier référencé 38 dans son ensemble. Le palonnier 38 comprend un cadre 39 dont la longueur est légèrement inférieure à celle d'un wagon 15. Quatre paires de pinces 28 sont montées par l'intermédiaire des axes de pivotement 30 sur le cadre 39. Comme on peut le voir sur la figure 5, deux paires de pinces 28 sont placées au voisinage des extrémités du cadre 38 et deux autres paires de pinces 28 sont placées au voisinage de l'axe transversal du cadre 38. Deux paires de pinces 28 situées dans une moitié du palonnier 38 peuvent être actionnées indépendamment des deux autres paires de pinces 28. Grâce à cela, il est possible de saisir, soit une petite boîte 16 de longueur comprise entre 6 et 9,125 mètres en extrémité de wagon, soit deux petites boîtes 16 de longueur comprise entre 6 et 9,125 mètres chacune, comme illustré en traits interrompus sur la figure 5, soit encore une seule grande boîte 16 de longueur supérieure ou sensiblement égale à 12 mètres.

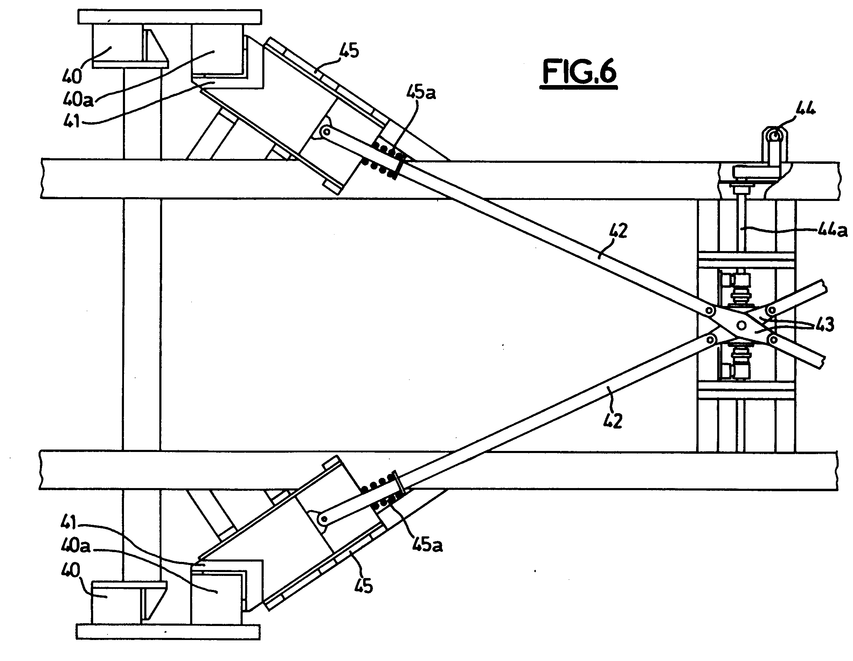

Le pont roulant 12 comprend, en outre, des guides verticaux 40 et 40a visibles en particulier sur la figure 6 qui est une vue de dessus partielle du palonnier 12. Des patins de guidage 41 sont montés à l'extrémité de bras 42 articulés sur deux axes centraux 43. Le mouvement vertical du palonnier 38 se trouve donc guidé, d'une part, par la coopération entre les guides verticaux 40 et le bâti et, d'autre part, entre les guides verticaux 40a et les patins de guidage 41. Une tige verticale 44 montée sensiblement au milieu du palonnier 38 est capable d'entrer en contact avec le sol, un wagon ou une navette autonome 2, afin de provoquer, par l'intermédiaire d'une tringlerie 44a, la rotation des axes 43, de façon à escamoter les patins de guidage 41 qui quittent le contact des guides verticaux 40a. En effet, la rotation de chaque axe 43 provoque une traction sur le bras 42 correspondant qui fait coulisser le patin 41 dans un manchon fixe 45 à l'encontre de la force d'un ressort 45a. La longueur de la tige 44 est telle que cette opération se produit un peu avant que le palonnier 38 soit arrivé en position de prise ou de dépose d'une boîte sur la plateforme d'un wagon. A ce moment, également les guides 40 cessent d'être en contact avec le bâti du palonnier 38, comme on le voit sur la figure 4. Lors de la poursuite du déplacement vertical du palonnier 38, le guidage final se fait directement sur le wagon 15, la navette autonome 2 ou des guides appropriés fixés au sol aux emplacements de stockage. A cet effet, le wagon 15 ou la navette autonome 2 comportent des guides de centrage, non représentés sur les figures, placés de façon à pouvoir coopérer avec des bras de guidage 46 faisant saillie verticalement en-dessous des pinces 28. On assure ainsi un positionnement précis des pinces 28 et du palonnier 38 par rapport au wagon 15, à la navette autonome 2 ou à l'emplacement de stockage considéré. On comprendra, bien entendu, que la structure du pont roulant 12 et du palonnier 38 pourrait être différente.

Les navettes 2 peuvent être considérées comme des wagons à plateforme autonomes, dont les déplacements sur la voie ferrée de service respective 1a sont automatiques. Chaque navette 2 comporte à cet effet un moteur d'entraînement. Elle peut prendre ses informations à l'aide de boucles inductives ou par radio et se positionner à chaque emplacement précis à l'aide de capteurs non représentés sur les figures. Chaque voie de service 1a peut recevoir une pluralité de navettes ferroviaires autonomes.

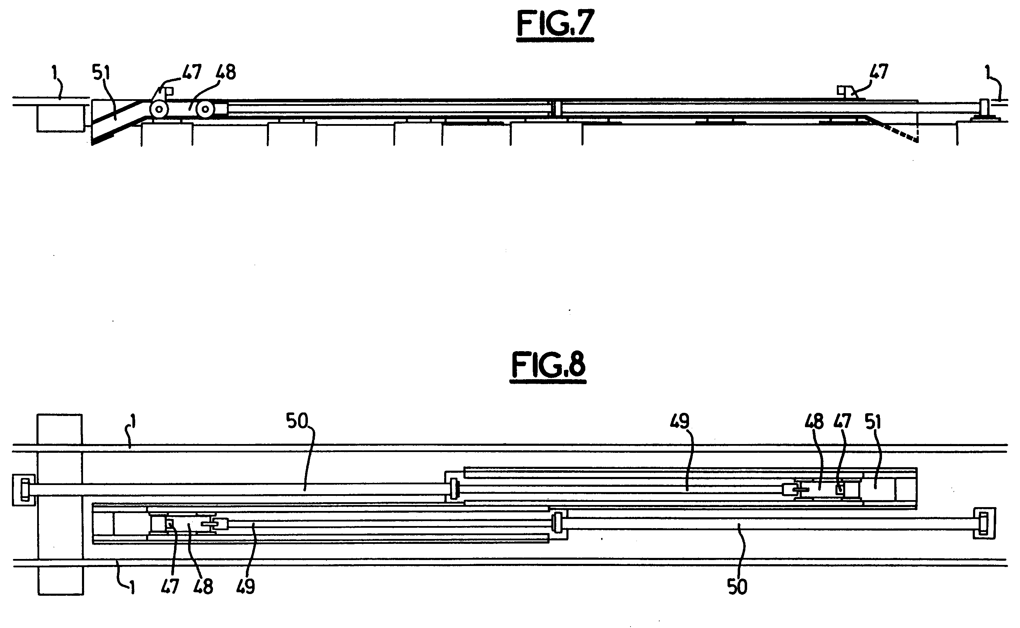

Le positionnement précis des wagons 15 peut se faire au moyen du dispositif de positionnement illustré sur les figures 7 et 8. Dans le mode de réalisation illustré, ce dispositif est placé au sol, entre les rails de la voie ferrée principale 1. Il comprend deux pattes de butée 47 montées chacune sur un chariot mobile 48 actionné par la tige 49 d'un vérin hydraulique 50. Chaque patte de butée 47 peut faire saillie vers le haut de façon à entrer en contact de butée avec un organe adapté, solidaire d'un wagon 15. Les deux vérins hydrauliques 50 sont disposés parallèlement l'un à l'autre entre les rails de la voie 1. Un déplacement des deux pattes de butée 47 l'une vers l'autre à partir de leur position écartée illustrée sur les figures 7 et 8, leur permet de venir en butée sur l'organe de positionnement solidaire du wagon 15, de façon à placer celui-ci dans une position précise. Les pattes de butée 47 peuvent être escamotées lorsque leur chariot de support 48 est déplacé vers le bas dans un conduit incliné 51, afin de ne pas engager le gabarit ferroviaire des parties basses des wagons 15.

Un tel dispositif de positionnement des wagons 15 est placé à quelques emplacements sur la voie principale 1. Il suffit en effet que certains wagons 15 du train soient positionnés (par exemple, un wagon sur six) pour atteindre la précision requise pour l'ensemble des wagons 15, par exemple à plus ou moins 15 cm. On notera que lors de ce positionnement, l'ensemble du train se déplace, y compris la locomotive.

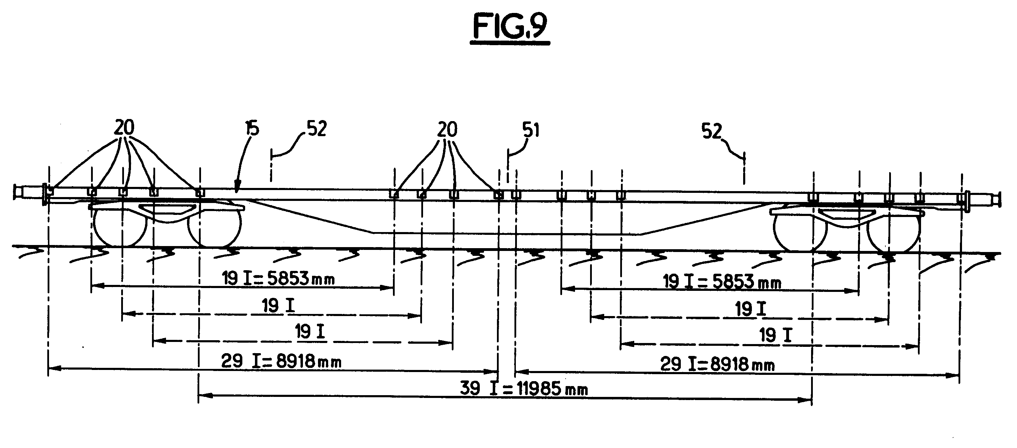

En se reportant à la figure 9, on voit, à titre d'exemple, un plan de chargement d'un wagon 15 permettant un centrage approximatif des boîtes 16 par rapport à un axe prédéterminé qui est, soit l'axe central 51, soit l'un des axes secondaires 52. Avec des boîtes normalisées, l'entraxe entre les pièces de fixation inférieures 17 des boîtes 16, peut être de 11985 mm pour une boîte de grandes dimensions, de 8918 mm pour une boîte intermédiaire et de 5853 mm pour une boîte de petites dimensions. Afin qu'un wagon 15 soit capable de recevoir tous les types de boîtes, l'invention prévoit de définir un plus grand diviseur commun pour les trois entraxes précédents. A titre d'exemple, on a illustré sur la figure 9 un plan de chargement réalisé à l'aide d'un plus grand diviseur commun pour l'intervalle I = 307,55 mm, permettant ainsi de définir les différents entraxes précités pour les boîtiers 20 au moyen des trois multiplicateurs 19,29 et 39.

Trois boîtiers 20 sont placés de chaque côté d'un axe secondaire 52, définissant ainsi trois positions possibles pour une boîte de petites dimensions, approximativement centrées sur l'axe 52.

Un autre boîtier 20 placé de chaque côté de l'axe 52 permet de définir la position d'une boîte intermédiaire centrée sur l'axe 52.

Enfin, un boîtier 20 est placé de chaque côté de l'axe central 51 pour définir la position d'une boîte de grandes dimensions centrée sur l'axe 51.

Bien entendu, d'autres plans de chargement pourraient être envisagés à titre de variante. On comprendra, en outre, que les navettes autonomes 2 présentent le même plan de chargement.

La disposition des différents boîtiers 20 correspond, bien entendu, à celle des pattes de préhension 33 sur les pinces 28 des différents palonniers 38.

On va maintenant décrire succinctement le fonctionnement de l'installation.

Un train arrive sur la voie principale 1, il est composé d'une locomotive 14 diesel ou électrique et d'une pluralité de wagons 15. Les wagons 15 sont chargés de boîtes 16 (une ou deux boîtes par wagon). Le train s'arrête avec une précision de plus ou moins 3 mètres environ par rapport à un point d'arrêt théorique. Les wagons 15 sont ensuite positionnés plus précisément, grâce aux dispositifs de positionnement, par exemple présentant la structure illustrée sur les figures 7 et 8. A cet effet, le train n'est plus freiné après l'arrêt et la locomotive se trouve ainsi également positionnée. Si la voie principale 1 est électrifiée, la caténaire est tout d'abord déplacée latéralement à l'opposé de la zone de stockage 3, c'est-à-dire vers la partie supérieure de la figure 1. Les ponts roulants 12 des différentes travées 4 à 9, viennent se positionner au-dessus des wagons 15. Les palonniers 38 descendent en étant guidés tout d'abord par les guides verticaux 40 et 40a, puis par les bras de guidage 46 venant coopérer avec les guides de centrage des wagons 15. Les pinces 28 qui s'étaient préalablement ouvertes, viennent se fermer autour de la ou des boîtes de chaque wagon 15, le palonnier 38 de chaque pont roulant 12 est déplacé vers le haut emportant avec lui la ou les boîtes 16 ainsi que les pièces intermédiaires 23. Chaque pont roulant 12 vient ensuite placer la ou les boîtes 16 qu'il a saisies, soit sur une navette ferroviaire 2 qui s'est déplacée pour se trouver dans la même travée que le pont roulant 12 considéré, soit sur l'un des emplacements de stockage 13 de la zone de stockage 3. On notera que les emplacements de stockage 13 comportent des organes de réception analogues aux boîtiers 20 des wagons 15 et disposés de la même manière, afin de recevoir les boîtes 16 avec les pièces intermédiaires 23. Les mouvements inverses sont effectués pour assurer le rechargement du train.

Les navettes ferroviaires 2 assurent le déplacement des boîtes 16 parallèlement à la voie ferrée principale 1, pour positionner ces boîtes en face des emplacements réservés où elles seront rechargées dans les trains en correspondance, se déplaçant ensuite sur la voie principale 1, ou encore, où elles peuvent être reprises par un autre pont roulant 12 pour être déplacées dans une autre travée de la zone de stockage 3. Les ponts roulants 12 assurent les chargements et déchargements des navettes ferroviaires 2.

Lorsque toutes les manutentions des boîtes 16 sur le train considéré sont terminées, la caténaire est remise en place le cas échéant, étant entendu que ce déplacement de la caténaire qui se fait au moyen de dispositifs non représentés sur les figures, n'est pas nécessaire lorsque la voie principale 1 n'est pas électrifiée. Le train est alors prêt pour repartir.

L'ensemble des opérations permettant ainsi la manutention de toutes les boîtes 16 et le traitement d'un train, ne prend guère plus d'environ 10 minutes.

L'installation peut être avantageusement complétée par un système informatique de gestion, permettant de connaître les emplacements disponibles sur les trains, les emplacements et la nature des différentes boîtes 16 se trouvant sur les trains ou en stock dans la zone de stockage 3, la réservation d'emplacements sur le train, l'optimisation des mouvements des composants du chantier et une interface avec les opérateurs humains.

## Revendications

1. Véhicule ferroviaire permettant la manutention automatique de boîtes, comprenant, de chaque côte, une série de logements (20) adaptés pour recevoir de manière amovible des pièces intermédiaires (23) de liaison et de manutention de boîtes (16), chaque série de logements comprenant au moins trois paires de logements, les distances entre les axes des logements de chacune des trois paires étant sensiblement égales respectivement aux produits de leur plus grand diviseur commun (I) par trois multiplicateurs entiers différents (19; 29; 39), chacune des trois paires de logements étant approximativement centrée par rapport à un axe respectif prédéterminé du véhicule qui est soit son axe transversal central (51) soit l'un de ses axes transversaux secondaires (52).

2. Véhicule selon la revendication 1, caractérisé par le fait que l'une des paires de logements est centrée par rapport à l'axe transversal central (51).

3. Véhicule selon la revendication 2, caractérisé par le fait que ladite paire de logements est associée au multiplicateur (39) de plus forte valeur.

4. Véhicule selon la revendication 1, 2 ou 3, caractérisé par le fait que chaque série comporte au moins deux paires de logements (20) approximativement respectivement centrées par rapport aux deux axes transversaux secondaires (52).

5. Véhicule selon la revendication 4, caractérisé par le fait que chacune desdites deux paires de logements est associée à un multiplicateur (19; 29) pris parmi les deux plus faibles.

6. Véhicule selon la revendication 4 ou 5, caractérisé par le fait que chaque série comporte deux groupes de quatre paires de logements (20) disposés de part et d'autre de l'axe central (51), les quatre paires de chaque groupe étant approximativement centrées par rapport à l'axe transversal secondaire correspondant (52).

7. Véhicule selon la revendication 6, caractérisé par le fait que chaque groupe comporte trois paires de logements (20) associées au multiplicateur de plus faible valeur (19), et une paire de logements associée au multiplicateur de valeur intermédiaire (29).

8. Véhicule selon l'une des revendications précédentes, caractérisé par le fait que les logements sont agencés de façon à permettre une préhension des boîtes (16) et de leurs pièces intermédiaires de liaison et de manutention (23), par le dessous, lors de leur manutention.

9. Véhicule selon l'une des revendications précédentes, caractérisé par le fait que chaque logement comprend un boîtier (20) débordant du côté correspondant de la plateforme (19) du véhicule auquel il est fixé, et comportant une ouverture traversante (21).

10. Véhicule selon la revendication 9, caractérisé par le fait que la face frontale supérieure (22) des boîtiers (20) se trouve à un niveau inférieur à celui de la plateforme (19) du véhicule.

## Claims

1. Railway vehicle enable automatic handling of boxes, comprising, on each side, a series of housings (20) adapted to receive removably intermediate connecting parts (23) and box handling parts (16), each series of housings comprising at least three pairs of housings, the distances between the axes of the housings of each of the three pairs being respectively substantially equal to the products of their highest common denominator (I) and three different integer multipliers (19; 29; 39), each of the three pairs of housings being approximately centered relative to a respective predetermined axis of the vehicle that is either its central transverse axis (51) or one of its secondary transverse axes (52)

2. Vehicle according to claim 1 characterized in that one pair of housings is centered relative to the central transverse axis (51).

3. Vehicle according to claim 2 characterized in that said pair of housings is associated with the highest value multiplier (39).

4. Vehicle according to claim 1 or claim 2 or claim 3 characterized in that each series includes at least two pairs of housings (20) approximately centered relative to respective secondary transverse axes (52)

5. Vehicle according to claim 4 characterized in that each of said two pairs of housings is associated with one of the lower two value multipliers (19; 29).

6. Vehicle according to claim 4 or claim 5 characterized in that each series includes two groups of four pairs of housings (20) disposed on respective opposite sides of the central axis (51), the four pairs of each group being approximately centered relative to the corresponding secondary transverse axis (52).

7. Vehicle according to claim 6 characterized in that each group includes three pairs of housings (20) associated with the lowest value multiplier (19) and one pair of housings associated with the intermediate value multiplier (29).

8. Vehicle according to any one of the preceding claims characterized in that the housings are adapted to allow the boxes (16) and their intermediate connecting and handling parts (23) to be held from below during handling.

9. Vehicle according to any one of the preceding claims characterized in that each housing includes a module (20) projecting from the corresponding side of the platform (19) of the vehicle to which it is fixed and an opening (21) through it.

10. Vehicle according to claim 9 characterized in that the top front face (22) of the module (20) is at a lower level than the platform (19) of the vehicle.

## Patentansprüche

1. Eisenbahnwagen für den automatischen Behälterumschlag, der auf jeder Seite eine Reihe von zum lösbaren Einsatz von Verbindungs- und Transportzwischenstücken (23) von Behältern (16) bestimmte Aufnahmen (20) aufweist, wobei jede Reihe von Aufnahmen wenigstens drei Paare von Aufnahmen aufweist, wobei bei den drei Paaren die Achsabstände der Aufnahmen der einzelnen Paare im Wesentlichen gleich dem jeweiligen Produkt ihres größten gemeinsamen Teilers (I) und dreier verschiedener, ganzzahliger Multiplikatoren (19; 29; 39) sind (und) wobei jedes der drei Aufnahmepaare näherungsweise jeweils bezüglich einer vorbestimmten Achse des Wagens zentriert ist, die entweder dessen Mittenquerachse (51) oder eine von dessen Nebenquerachsen (52) ist.

2. Wagen nach Anspruch 1, dadurch gekennzeichnet, dass ein Aufnahmepaar bezüglich der Mittenquerachse (51) zentriert ist.

3. Wagen nach Anspruch 2, dadurch gekennzeichnet, dass das genannte Aufnahmepaar dem höchstwertigen Multiplikator (39) zugeordnet ist.

4. Wagen nach Anspruch 1, 2 oder 3, dadurch gekennzeichnet, dass jede Reihe wenigstens zwei Aufnahmepaare (20) aufweist, die jeweils näherungsweise bezüglich zweier Nebenquerachsen (52) zentriert sind.

5. Wagen nach Anspruch 4, dadurch gekennzeichnet, dass jedes der genannten Aufnahmepaare jeweils einem der beiden niedrigstwertigen Multiplikatoren (19; 29) zugeordnet ist.

6. Wagen nach Anspruch 4 oder 5, dadurch gekennzeichnet, dass jede Reihe zwei Gruppen von je vier Aufnahmepaaren (20) aufweist, die zu beiden Seiten der Mittenachse (51) angeordnet sind, wobei die vier Paare jeder Gruppe jeweils bezüglich der entsprechenden Nebenquerachse (52) näherungsweise zentriert sind.

7. Wagen nach Anspruch 6, dadurch gekennzeichnet, dass jede Gruppe drei Aufnahmepaare (20), die dem niedrigstwertigen Multiplikator (19) und ein Aufnahmepaar aufweist, das dem Multiplikator mit einem mittleren Wert (29) zugeordnet ist.

8. Wagen nach einem der vorhergehenden Ansprüche, dadurch gekennzeichnet, dass die Aufnahmen derart ausgebildet sind, dass sie ein Ergreifen der Behälter (16) und deren Verbindungs- und Transportzwischenstücken (23) bei dem Umschlagvorgang von unten her erlauben.

9. Wagen nach einem der vorhergehenden Ansprüche, dadurch gekennzeichnet, dass jede Aufnahme ein Gehäuse (20) aufweist, das auf der entsprechenden Seite der Ladefläche (19) des Wagens, an der es befestigt ist, randseitig vorsteht und das eine durchgehende Öffnung (21) aufweist.

10. Wagen nach Anspruch 9, dadurch gekennzeichnet, dass die obere Stirnfläche (22) der Gehäuse (20) auf einem Niveau liegt, das unter jenem der Ladefläche (19) des Wagens sich befindet.
